# EUROPÄISCHE PATENTSCHRIFT

(11) **EP 0 634 515 B1**
(45) Veröffentlichungstag und Bekanntmachung des Hinweises auf die Patenterteilung: **18.09.1996**
(21) Anmeldenummer: 94110187.5
(22) Anmeldetag: 30.06.1994
(51) Int. Cl.: D06N 5/00, E04D 5/10

(54) **Brandhemmend ausgerüstetes Dach- und Dichtungsbahnmaterial und Verfahren zur Herstellung derselben**
Fire-retardent roofing sheet and sealing sheet material and method of their preparation
Bande de toiture et d'échanchéité enduite difficilement combustible et procédé pour leurs préparations

(30) Priorität: 14.07.1993 DE 4323582; 16.02.1994 DE 4404887
(43) Veröffentlichungstag der Anmeldung: 18.01.1995
(73) Patentinhaber: Georg Börner Chemisches Werk für Dach- und Bautenschutz GmbH & Co. KG, D-36251 Bad Hersfeld (DE)
(72) Erfinder: Fassbender, Gerhard, Dr.rer.nat., D-36251 Bad Hersfeld (DE)
(74) Vertreter: Weisert, Annekäte, Dipl.-Ing. Dr.-Ing.

(56) Entgegenhaltungen:
- EP-A- 0 023 764
- EP-A- 0 305 852
- FR-A- 2 256 945
- US-A- 3 050 424
- US-A- 4 567 084

## Beschreibung

Die Erfindung betrifft ein brandhemmend ausgerüstetes Dach- und Dichtungsbahnmaterial und ein Verfahren zur Herstellung desselben.

Bitumenbahnen sind als Baumaterialien zur Abdichtung von Dächern, Fundamenten, Kellern etc. ein seit vielen Jahrzehnten bewährtes Material. Sie bestehen aus einem armierenden Trägermaterial (Einlage), z.B. Glasvlies, Glasgewebe, Polyestervlies usw., mit Bitumen getränkt, welches beidseitig mit bituminöser Deckmasse beschichtet ist.

Bei hochwertigen Bahnen werden Polymerbitumina, z.B. auf der Basis von SBS/Bitumen oder APP/Bitumen, zur Deckmassenherstellung oder auch zur Einlagentränkung verwandt. Solche Materialien zeichnen sich gegenüber konventionellen Bitumenbahnen durch wesentlich verbesserte technische Eckdaten aus wie z.B. Flexibilität in der Kälte, Standfestigkeit in der Wärme, sowie Alterungsverhalten.

Bei SBS/Bitumen bzw., genauer ausgedrückt, SBS-modifiziertem Polymerbitumen handelt es sich, vereinfacht, um ein Gemisch von Bitumen mit SBS-Elastomer. SBS ist ein sogenannter thermoplastischer Sequenzkautschuk. Die Polymerkettensequenz lautet Styrol-Butadien-Styrol, daher die Kurzbezeichnung. Bei APP/Bitumen bzw. APAO-modifiziertem Polymerbitumen handelt es sich im Prinzip um ein Gemisch aus Kunststoff mit Bitumen. APP (Ataktisches Polypropylen) ist ein amorphes Koppelprodukt, das bei der Polymerisation von kristallinem isotaktischem Polypropylen anfällt. Generell erzielt man durch Vermischen geeigneter Kunststoffe mit Bitumen bedeutende Eigenschaftsverbesserungen gegenüber unmodifizierten Bitumina, wie z.B. hinsichtlich des Alterungsverhaltens, der Tieftemperatur-Flexibilität oder der Fließneigung bei hoher Temperatur.

Neben diesen bewährten, hochleistungsfähigen Materialien findet man im Baugewerbe, bevorzugt im Flachdachbereich, zunehmend Folien aus polymeren Werkstoffen. Diese durch Extrudieren bzw. Kalandrieren produzierten Waren zählen entweder zur Gruppe der Plastomeren (Thermoplasten) oder Elastomeren (Kautschukfolien). Man findet bei beiden Typen hauptsächlich Materialien, die nicht trägerarmiert sind; aber auch trägerarmierte Folien werden angeboten, wobei sich die mit Trägereinlage ausgerüsteten Produkte - wie die generell mit Einlagen versehenen Polymerbitumen-Dachbahnen - durch besonders hohe mechanische Belastbarkeit auszeichnen.

Ein prinzipieller Nachteil der zuvor geschilderten Dachabdichtungsmaterialien ist, daß sie brennbar sind, da sie zum überwiegenden Teil aus Kohlenwasserstoff-Gemischen bestehen. Anforderungen an das Brandverhalten von Dachabdichtungsmaterialien sind im Deutschen Baurecht angegeben, zum Beispiel
(a) in der DIN 4102 Teil 7 - Widerstand gegen Flugfeuer und strahlende Wärme, sowie
(b) in der DIN 18234 - Brandangriff aus dem Gebäudeinneren.

Im Zuge der Harmonisierung nationaler Normen und Vorschriften im Blick auf den gemeinsamen europäischen Markt sind auch andere Anforderungen und Prüfverfahren in der Diskussion. So werden als Prüfmethoden zur Ermittlung der Widerstandsfähigkeit einer brennbaren Bedachung gegen Flugfeuer und strahlende Wärme als Alternative oder Ergänzung der deutschen Normen, z.B.
(1) der Nordtest Nr. 6 (Geltungsbereich Dänemark, Norwegen, Schweden, Finnland), sowie
(2) der sogenannte "T 30"-Test (Frankreich)
in den entsprechenden Gremien diskutiert.

Der deutsche Test beschreibt das Verhalten einer Dachabdichtung gegenüber Flugfeuer ohne zusätzliche strahlende Wärme und ohne zusätzliche Windbelastung. Der Durchbrand wird als Versagenskriterium mit herangezogen.

Der Nordtest Nr. 6 prüft mit Flugfeuer und Wind, ohne zusätzliche strahlende Wärmebelastung. Durchbrand durch die gesamte Dachabdichtung ist kein Prüfungskriterium.

Der französische "T30"-Test prüft mit Flugfeuer, Wind und zusätzlicher Strahlerwärme. Auch der Durchbrand wird zur Bewertung herangezogen.

Ein großes Interesse an einer aussagekräftigen Bewertung des Brandrisikos einer organischen Dachabdichtung haben selbstverständlich auch die Feuerversicherungs-Gesellschaften sowie nicht zuletzt die Feuerwehren, die entstandene Brände unter nicht unerheblichem Risiko bekämpfen müssen.

Gängige Dachabdichtungsmerialien (sowohl Polymerbitumenbahnen als auch Kunststoff-Folien) können bei sorgfältiger Rezeptierung und Produktion die Anforderungen nach DIN 4102, Teil 7 bei 15° Dachneigung erfüllen. In kritischen Fällen hilft dabei z.B.
(a) das Mischen der brennbaren Massen mit anorganischem, nicht brennbarem Füllstoffmaterial; diese Möglichkeit ist limitiert, da die Füllstoffverträglichkeit der verschiedenen Materialien begrenzt ist; oder
(b) wenn das unter (a) angegebene Verfahren nicht ausreicht, besteht die Möglichkeit, durch Unterlegung der brennbaren Dachbahn mit einem nicht brennbaren, evtl. auch saugfähigen, Material, wie z.B. Mineralwolle, Glasvlies oder Glasfilz, das Brandverhalten der Dachabdichtung zu verbessern. Ein solches Verfahren ist in der DE-A-2 349 666 beschrieben; wie der nicht brennbare Füllstoff wirken diese Materialien rein "passiv"; ihre Wirkung ist begrenzt.

Vor dem beschriebenen Hintergrund hat es nicht an Versuchen gefehlt, das Brandverhalten organischer Dachabdichtungen durch direktes Einarbeiten "aktiver", brandschützender Komponenten zu verbessern. Inzwischen ist eine Vielzahl von Stoffen und Mehrstoff-Formulierungen bekannt und am Markt erhältlich, die das Brandverhalten von Kunststoff-Formulierungen entscheidend verbessern können. Ihre chemische Zusammensetzung ist dem Fachmann an sich bekannt. Generell unterscheidet man Brandschutz-Komponenten, welche:
(A) die chemische Kettenreaktion des "Brennens" verzögern oder ganz unterbinden;
(B) durch Freisetzen nicht brennbarer Gase unter Wärmeeinwirkung, wie z.B. Kohlendioxid, Stickstoff, oder Wasserdampf, die Sauerstoffkonzentration am Brandherd herabsetzen. Da Sauerstoff am Brandherd Voraussetzung für das "Brennen" ist, ist diese einfache Methode sehr wirkungsvoll, wenn auch zeitlich limitiert;
(C) unter Wärmeentwicklung eine hitzebeständige Schaumschicht bilden, die sowohl Sauerstoff vom brennbaren Material fernhält, als auch dieses Material, falls flüssig, aufsaugt und schützt. Solche sogenannten Intumeszenz-Materialien (DSB-Dämmschichtbildner) vereinigen oft mehrere der vorher beschriebenen Wirkprinzipien; sie gelten als besonders effektiv;
(D) unter Hitzeeinwirkung zu einer unbrennbaren Schicht zusammensintern (keramisierende Brandschutzmittel) und so die Brandausbreitung verhindern. Da solche Stoffe erst bei relativ hohen Temperaturen wirksam werden und die Wirksamkeit durch "Verunreinigung" mit brennbarem Material stark gemindert wird, sind sie für den hier beschriebenen Zweck von untergeordnetem Interesse.

Versuche, solche Stoffe bzw. Stoffgemische in Dichtungsbahnen einzusetzen, brachten jedoch nicht den erhofften Erfolg. Die Mengen an Brandschutzadditiven, die zu einer meßbaren Verbesserung notwendig sind, brachten neben dem gewünschten Effekt einer Minderung des Brandverhaltens unerwünschte negative Effekte, wie z.B. ein Nachlassen der mechanischen Eigenschaften, wie Flexibilität, Reißfestigkeit, Reißdehnung, Alterungsverhalten. Diese Verschlechterung der mechanischen Eigenschaften vermindert auch sehr stark die Standzeit der Dichtungsbahnen. Diese Erkenntnisse haben dazu beigetragen, daß die Methode nach bisheriger Kenntnis nicht in der Praxis verwendet wird.

In der DE-A-3 220 821 wird deshalb eine brandgeschützte Dichtungsbahn beschrieben, deren Brandschutzlage aus anorganischem Fasermaterial mit Stoffen versehen ist, die im Brandfall durch Abspaltung von Wasserdampf und unbrennbaren Gasen das Brandgeschehen aktiv beeinflussen. Die danach gefertigten Brandschutzlagen werden unter dem Begriff "Brandschutzvlies" oder "Flammschutzbahn" auf dem Markt vertrieben. Diese Brandschutzbahnen werden üblicherweise als Trennlagen zwischen Dämmung und Abdichtung lose verlegt. Der damit verbundene zusätzliche Arbeitsgang wird, wegen der damit verbundenen Arbeitskosten, als nachteilig empfunden.

Um diesem Mangel abzuhelfen, beschreibt EP-A-0 305 852 ein Verfahren, bei dem die Brandschutz-Komponenten auf eine oder beide Seiten der Dichtungsbahn flächig aufgetragen werden, wobei anschließend zum Schutz ein Vliesstoff auf die beschichtete(n) Seite(n) aufkaschiert wird. Hierbei wird so verfahren, daß zunächst auf konventionelle Art und Weise eine fertige, funktionstüchtige Dachbahn hergestellt wird und daß danach erst in zwei weiteren Arbeitsschritten zunächst das Brandschutzadditiv ein- oder beiderseitig angetragen und daraufhin ein Vlies ein- bzw. beidseitig aufgebracht wird. Dieses Vlies hat die ausschließliche Funktion, die Brandschutzkomponente vor mechanischer Beschädigung oder Witterungseinflüssen zu schützen. Eine nach diesem Verfahren hergestellte Dichtungsbahn hat jedoch den Nachteil, daß beim Verschweißen der Nähte mit Heißluft oder heißer Flamme im Nahtbereich die Brandschutzadditive aktiviert werden, was sich durch Aufschäumen und Ausgasen bemerkbar macht. Unter diesen Begleitumständen kann eine dauerhaft dichte, tragfähige Naht nur selten hergestellt werden.

Ein wichtiger Grund für das Scheitern von Versuchen, Dichtungsbahnen brandgeschützt auszurüsten, ist auch die Verlegeart, insbesondere von bituminösen Dachbahnen, aber auch von diversen Kunststoff-Folien. Diese werden nämlich unter Zuhilfenahme von Heißluft oder Warmgas, wie oben angedeutet, auf den Untergrund appliziert. Bei den sogenannten Bitumenschweißbahnen wird dabei so vorgegangen, daß die unterhalb der mittig angeordneten Trägereinlage aufgebrachte Deckmasse mit einem Gasbrenner oder mit einem Heißluftgerät aufgeschmolzen wird. Diese heißflüssige Masse wird zur punkt- oder streifenweisen oder auch vollflächigen Verklebung der Bahn mit dem Untergrund benutzt. Die Nähte werden ebenfalls mit diesem sogenannten "Schweißverfahren" verschlossen. Bei Folien ist eine teilweise oder vollflächige Fixierung auf dem Untergrund nach diesem Schweißverfahren nicht üblich. Hier werden lediglich die Nähte, im allgemeinen mit Heißluft, dichtend und kraftschlüssig verbunden.

Bei dieser Verlegemethode werden an der Unterseite der Bahn Temperaturen zwischen 600 und 850°C erreicht. Die Temperaturen, bei denen handelsübliche Brandschutzadditive wirksam werden, liegen im allgemeinen zwischen 80 und 320°C. Es ist also leicht einzusehen, daß beim Verschweißen zumindest ein Teil der eingesetzten Additive (Brandschutzmittel) verbraucht wird, der dann im Brandfall fehlt. Bei aufschäumenden bzw. Gas freisetzenden Brandschutzmaterialien ist zudem mit sehr starken Fehlstellen in der Klebefläche zu rechnen, wodurch die Dichtigkeit und Sturmsicherheit der Dachhaut in Frage gestellt wird.

Aus der EP-A-0 023 764 ist ein brandhemmend ausgerüstetes Dach- und Dichtungsbahnmaterial bekannt, das ein armierendes Trägermaterial aus einer mit Bitumen imprägnierten Glasfasermatte umfaßt, die ein auf eine Seite derselben aufgebrachtes Flamm- bzw. Brandschutzmaterial aufweist. Hinsichtlich eines hieraus herstellbaren Endprodukts offenbart die EP-A-0 023 764 jedoch lediglich, daß ein solches mit Bitumen imprägniertes und einseitig mit Flamm- bzw. Brandschutzmaterial versehenes Trägermaterial mit faseriger Isolierung oder Schaumisolierung als Feuchtigkeitsbarriere laminiert wird.

Aufgabe der Erfindung ist es insbesondere, ein brandhemmend ausgerüstetes Dach- und Dichtungsbahnmaterial zur Verfügung zu stellen, mit dem die obigen Nachteile weitestgehend überwunden werden, indem es mit der bauüblichem bewährten Technik des Verschweißens sicher und praktisch problemlos verarbeitbar und ausgezeichnet brandhemmend wirksam ist.

Diese Aufgabe wird durch ein brandhemmend ausgerüstetes Dach- und Dichtungsbahnmaterial gelöst, das folgendes umfaßt:
(a) ein armierendes Trägermaterial aus thermoplastischem Kunststoff;
(b) ein die thermische und/oder mechanische Belastbarkeit des armierenden Trägermatierals erhöhendes Imprägniermaterial, mit welchem das armierende Trägermaterial imprägniert ist;
(c) ein Flamm- bzw. Brandschutzmaterial, das auf die Oberseite des armierenden Trägermaterials aufgebracht und so gewählt ist, daß es erst bei 300°C oder einer darüber liegenden Temperatur wirksam wird;
(d) eine unterseitig auf dem mit dem Flamm- bzw. Brandschutzmaterial versehenen, imprägnierten Trägermaterial befindliche schweißbare Unterschicht aus Polymerbitumen, dessen Kunststoffgehalt maximal 35 Gew.-% beträgt, und die gegebenenfalls einen oder mehrere Füllstoffe enthält; und
(e) eine oberseitig auf dem mit dem Flamm- bzw. Brandschutzmaterial versehenen, imprägnierten Trägermaterial befindliche Oberschicht aus einem oder mehreren aus der aus Bitumen, Polymerbitumen, plastomerem Kunststoff und elastomerem Kunststoff bestehenden Gruppe ausgewählten Materialien, wobei die Oberschicht gegebenenfalls einen oder mehrere Füllstoffe enthält.

Es wurde nämlich überraschenderweise gefunden, daß die obige Aufgaben- bzw. Problemstellung auf unerwartet einfache Art und Weise lösbar ist, indem ein Flamm- bzw. Brandschutzmaterial, insbesondere in der Form eines handelsüblichen Brandschutzpräparats, in angemessener Menge auf die Oberseite des "imprägnierten armierenden Trägermaterials", das hier auch als "Trägereinlage" bezeichnet wird, aufgebracht wird, wobei dieser Vorgang entweder
(I) während der Trägereinlagenproduktion oder
(II) während der Dach- und Dichtungsbahnen-Produktion erfolgen kann.

Auf diese Weise erhält man nach der Dach- und Dichtungsbahnen-Produktion ein Material, welches alle eingangs genannten Brandtests in sämtlichen vorgesehenen Varianten besteht. Das Produkt selber ist problemlos auf konventionelle Art zu verlegen. Ein unerwünschtes Wirksamwerden der Additive (Flamm- und Brandschutzmaterial) während der Verlegung wurde nicht beobachtet.

Die Unterschicht sowie gegebenenfalls auch die Oberschicht der erfindungsgemäßen Dach- und Dichtungsbahn besteht aus polymermodifiziertem Bitumen, vorzugsweise mit Mineralmehl gefüllt. Die Deckschichtmenge beträgt bei in Mitteleuropa üblichen, im Schweißverfahren zu verarbeitenden Dachbahnen bevorzugt ca. 4,5 bis 6 kg/m². Daraus ergeben sich wesentliche Anforderungen an die brandhemmende Ausrüstung, denn das Brandverhalten von polymermodifizierten Bitumina ist in aller Regel sehr kritisch, d.h. ein Brand ist schwerer zu beherrschen als ein Brand von geblasenem Bitumen. Dies läßt sich neben den bekannten, hier beschriebenen Brandtests, z.B. durch das Messen des Flammpunkts oder auch durch Bestimmen des LOI feststellen, wobei der LOI der niedrigst mögliche Sauerstoffgehalt in der Atmosphäre ist, bei dem das Produkt, nachdem es entzündet worden ist, weiterbrennt.

Die erfindungsgemäße Dach- und Dichtungsbahn hat ein Trägermaterial aus thermoplastischem Kunststoff, wie beispielsweise aus Polyester und/oder Polyamid, das äußerst wichtige mechanische Vorteile wie hohe Dehnfähigkeit und hohe Perforationsfestigkeit sowie hohe Reißfestigkeit, besitzt.

Dadurch, daß das Brandschutzmaterial so gewählt ist, daß es erst bei 300°C oder über 300°C wirksam wird (d.h. z.B. aufschäumt bzw. Gase entwickelt), wird sowohl bei dem Herstellen des erfindungsgemäßen Dach- und Dichtungsbahnmaterial als auch bei dessen Aufschweißen auf dem Dach eine ausgezeichnet sichere Handhabung ermöglicht und eine Verminderung der brandhemmenden Eigenschaften durch diese Vorgänge ausgeschaltet.

Bevorzugt werden in dem erfindungsgemäßen Dach- und Dichtungsbahnmaterial handelsübliche halogenfreie Flamm- bzw. Brandschutzmaterialien verwendet.

In dem oben unter (I) genannten Fall der "Trägereinlagenproduktion" wird zunächst ein brandhemmend ausgerüstetes Dach- und Dichtungsbahnmaterial-Zwischenprodukt erhalten, das zu dem fertigen brandhemmend ausgerüsteten Dach- und Dichtungsbahnmaterial nach der Erfindung weiterverarbeitet wird.

Das brandhemmend ausgerüstete Dach- und Dichtungsbahnmaterial-Zwischenprodukt umfaßt:
(a) ein armierendes Trägermaterial aus thermoplastischem Kunststoff;
(b) ein die thermische und/oder mechanische Belastbarkeit des armierenden Trägermaterials erhöhendes Imprägniermaterial, mit welchem das armierende Trägermaterial imprägniert ist; und
(c) ein Flamm- bzw. Brandschutzmaterial, das auf die Oberseite des armierenden Trägermaterials aufgebracht ist und so gewählt ist, daß es erst bei 300°C oder einer darüber liegenden Temperatur wirksam wird.

Im einzelnen kann das Flamm- bzw. Brandschutzmaterial ein intumeszierendes und/oder gasentwickelndes Flamm- bzw- Brandschutzmaterial sein.

Derartige Flamm- bzw. Brandschutzmaterialien sind oder enthalten insbesondere:
(i) Graphit, der unter Wärmeentwicklung expandiert und brandhemmende Gase freisetzt und/oder
(ii) Phosphor-Stickstoff-Verbindungen, wie Ammoniumphosphate und -polyphosphate; und/oder
(iii)Kohlenstoffspender enthaltende Zusammensetzungen, wie beispielsweise Stärke plus Penthaerythrit, gegebenenfalls plus Phosphor-Stickstoff-Verbindung(en), wie z.B. Dicyandiamid und/oder Diammoniumphosphat.

Vorzugsweise wird das Flamm- oder Brandschutzmaterial in einer Menge von 20 bis 120 g/m², besonders bevorzugt in einer Menge von 40 bis 80g/m² auf die Oberseite des imprägnierten armierenden Trägermaterials aufgebracht.

Das armierende Trägermaterial ist bevorzugt ein textiles oder textilartiges Flächengebilde, vorzugsweise ein Vlies, Gelege, Gewebe, Gewirk oder Gestrick oder eine Kombination von mehreren dieser Flächengebildearten, wie bevorzugt ein Vlies/Gelege- oder Vlies/Gewirk-Kombinationsträgermaterial.

Das Imprägniermaterial ist vorzugsweise ein verstärkender Binder, insbesondere eine Dispersionsbinderlösung, und/oder ein Bitumen, vorzugsweise ein Polymerbitumen. Das Imprägniermaterial kann gleichzeitig als Klebemittel zum Aufbringen des Flamm- bzw. Brandschutzmaterials auf die Oberseite des armierenden Trägermaterials fungieren, oder das Flamm- bzw. Brandschutzmaterial kann durch ein gesondertes Klebemittel aufgebracht sein.

Schließlich kann die Ober- und/oder Unterseite des Dach- und Dichtungsbahnmaterials mit einem mineralischen Bestreuungsmaterial abgestreut oder mit einer Abdeckfolie versehen sein.

Vorzugsweise ist der thermoplastische Kunststoff des Trägermaterials Polyester und/oder Polyamid.

Der Kunststoffgehalt des Polymerbitumens der Oberschicht kann ebenfalls - wie der der Unterschicht - maximal 35 Gew.-% betragen.

Eine besonders hervorragende Verarbeitbarkeit wird erzielt, wenn ein Teil des armierenden Trägermaterials, der einem Nahtoder Stoßbereich des fertigen Dach- und Dichtungsbahnmaterials entspricht, von Flamm- bzw. Brandschutzmaterial freigelassen ist, da dann diese freigelassenen Bereiche leicht verschweißt werden können, ohne daß hierbei die Gefahr einer Aktivierung des Flamm- bzw. Brandschutzmaterials besteht.

Ein Verfahren zur Herstellung des vorerwähnten brandhemmend ausgerüsteten Dach- und Dichtungsbahnmaterial-Zwischenprodukts, aus dem dann das erfindungsgemäße Dach- und Dichtungsbahnmaterial durch weitere Verfahrensschritte hergestellt wird, umfaßt vorzugsweise die folgenden Verfahrensschritte:
(a) Imprägieren des armierenden Trägermaterials mit einem dessen thermische und/oder mechanische Belastbarkeit erhöhenden Imprägniermaterial, das bevorzugt ein verstärkender Binder, insbesondere eine Dispersionsbinderlösung, ist; und
(b) Aufbringen des Flamm- bzw. Brandschutzmaterials auf die Oberseite des imprägnierten Trägermaterials, wonach bevorzugt ein Trocknen und Konfektionieren durchgeführt wird.

Mit der Erfindung wird ein Verfahren zur Herstellung des brandhemmend ausgerüsteten Dach- und Dichtungsbahnmaterials zur Verfügung gestellt, umfassend die folgenden Verfahrensschritte:
(a) Imprägnieren des armierenden Trägermaterials mit einem dessen thermische und/oder mechanische Belastbarkeit erhöhenden Imprägniermaterial;
(b) Aufbringen des Flamm- bzw. Brandschutzmaterials auf die Oberseite des imprägnierten Trägermaterials; und
(c) Aufbringen der Unter- und Oberschicht beidseitig auf das imprägnierte und oberseitig mit dem Flamm- und Brandschutzmaterial versehene Trägermaterial.

Dieses Verfahren wird bevorzugt so ausgeführt, daß das Trägermaterial im Verfahrensschritt (a) zunächst mit einem verstärkenden Binder, z.B. einer Dispersionsbinderlösung, und dann mit einem Bitumen, vorzugsweise Polymerbitumen, imprägniert wird, wobei das imprägnierte Trägermaterial zwischen dem Imprägnieren mit dem verstärkenden Binder und dem Imprägnieren mit Bitumen vorzugsweise getrocknet wird.

Das erfindungsgemäße brandhemmend ausgerüstete Dach- und Dichtungsbahnmaterial kann auch aus dem oben angegebenen Dach- und Dichtungsbahnmaterial-Zwischenprodukt durch die folgenden weiteren Verfahrensschritte hergestellt werden:
(c) Imprägnieren des Dach- und Dichtungsbahnmaterial-Zwischenprodukts mit Bitumen, vorzugsweise Polymerbitumen, oder einem Unter- oder Oberschichtmaterial; und
(d) Aufbringen der Unter- und Oberschicht auf das mit Bitumen, vorzugsweise Polymerbitumen, oder einem Unteroder Oberschichtmaterial imprägnierte Dach- und Dichtungsbahnmaterial-Zwischenprodukt.

Sowohl bei dem Verfahren zum direkten Herstellen des erfindungsgemäßen Dach- und Dichtungsbahnmaterials als auch bei dem Verfahren zum Herstellen desselben über das vorgenannte Dach- und Dichtungsbahnmaterial-Zwischenprodukt wird nach dem Verfahrensschritt des Aufbringens der Deckmasse vorzugsweise die Ober- und/oder Unterseite des Dach- und Dichtungsbahnmaterials mit einem mineralischen Bestreuungsmaterial abgestreut oder mit einer Abdeckfolie versehen, wobei es zu bevorzugen ist, daß nach dem Abstreuen das Dach- und Dichtungsbahnmaterial gekühlt und gegebenenfalls konfektioniert wird.

Sowohl bei dem Verfahren zur direkten Herstellung des erfindungsgemäßen Dach- und Dichtungsbahnmaterials als auch beim Verfahren zur Herstellung desselben über das obige Dach- und Dichtungsbahnmaterial-Zwischenprodukt erfolgt das Aufbringen des Flamm- bzw. Brandschutzmaterials bevorzugt entweder dadurch, daß das Flamm- bzw. Brandschutzmaterial durch mechanisches Bestreuen auf die Oberseite des imprägnierten Trägermaterials aufgebracht wird, oder dadurch, daß das Flamm- bzw. Brandschutzmaterial durch Bestreuung im elektrostatischen Feld auf das imprägnierte Trägermaterial aufgebracht wird. Während im letzteren Fall das überschüssige Flamm- bzw. Brandschutzmaterial durch das elektrostatische Feld "zurückgeholt" wird, wird im ersteren Fall der an der Oberseite des imprägnierten Trägermaterials haftende Überschuß an Flamm- bzw. Brandschutzmaterial durch zusätzliche Maßnahmen, vorzugsweise durch Absaugen, entfernt.

Weitere Merkmale von Weiterbildungen der Erfindung sind in den abhängigen Ansprüchen angegeben.

Die vorstehenden und weitere Vorteile und Merkmale der Erfindung seien nachfolgend anhand von besonderes bevorzugten Ausführungsformen des erfindungsgemäßen Dach- und Dichtungsbahnmaterials und des Zwischenprodukts, sowie des erfindungsgemäßen Verfahrens zur Herstellung des Dach- und Dichtungsbahnmaterials nach der Erfindung unter teilweiser Bezugnahme auf die Zeichnungen näher beschrieben und erläutert; es zeigen:
- Figur 1: eine schematische Darstellung einer ersten Ausführungsform eines ersten Teils des erfindungsgemäßen Verfahrens zur Herstellung eines Zwischenprodukts, aus dem dann später das Dach- und Dichtungsbahnmaterial nach der Erfindung durch einen zweiten Teil des erfindungsgemäßen Verfahrens herstellt wird;
- Figur 2: eine schematische Darstellung einer zweiten Ausführungsform eines ersten Teils des erfindungsgemäßen Verfahrens zur Herstellung eines Zwischenprodukts, aus dem dann später durch einen zweiten Teil des erfindungsgemäßen Verfahrens das Dach- und Dichtungsbahnmaterial nach der Erfindung herstellt wird;
- Figur 3: eine schematischen teilweisen Querschnitt durch eine Ausführungsform eines erfindungsgemäßen Dach- und Dichtungsbahnmaterials in einem Naht- und Stoßbereich zweier Dach- und Dichtungsbahnen; und
- Figur 4: eine schematische teilweise Darstellung einer Ausführungsform des Verfahrens nach der Erfindung zur Herstellung eines erfindungsgemäßen Dach- und Dichtungsbahnmaterials.

Es sei zunächst auf eine grundsätzliche Ausführungsform des Verfahrens zur Herstellung eines brandhemmend ausgerüsteten Dach- und Dichtungsbahnmaterial-Zwischenprodukts zur späteren Herstellung eines Dach- und Dichtungsbahnmaterials nach der Erfindung durch weitere Verfahrensschritte angegeben, welche Ausführungsform im wesentlichen die folgenden Verfahrensschritte umfaßt:
(1) Spinnen des Ausgangsmaterials, aus dem das Trägermaterial hergestellt werden soll, z.B. Polyesterfasern.
(2) Herstellen des flächigen, armierenden Trägermaterials, z.B. eines Polyestervlieses, aus dem gesponnenen Ausgangsmaterial, insbesondere durch Verwirbeln, Vernadeln und/oder dergleichen;
(3) Imprägnieren des flächigen, armierenden Trägermaterials mit einem dessen thermische und/oder mechanische Belastbarkeit erhöhenden Imprägniermaterial, wie insbesondere mit einem verstärkenden Binder, z.B. einer geeigneten Dispersionsbinderlösung;
(4) Aufbringen eines Flamm- bzw. Brandschutzmaterials auf das imprägnierte, flächige, armierende Trägermaterial, insbesondere durch Aufstreuen desselben in Pulverform auf die zur Haftung desselben mit einem Klebemittel versehene Oberfläche des vorgenannten Trägermaterials, wobei vorteilhafterweise das Imprägniermaterial, z.B. die oben angegebene Dispersionsbinderlösung, gleichzeitig als das Klebemittel zum Fixieren des Flamm- bzw. Brandschutzmaterials am Trägermaterial verwendet werden kann.
(5) Trocknen des so erhaltenen Dach- und Dichtungsbahnmaterial-Zwischenprodukts, z.B. in einer Trockenkammer.
(6) Konfektionieren, z.B. Zuschneiden in Länge und Breite, des getrockneten Dach- und Dichtungsbahnmaterial-Zwischenprodukts.

Bestehende konventionelle Fertigungslinien zur Herstellung von Trägereinlagen können daher durch Plazierung einer Auftrags-bzw. Aufstreueinrichtung für Flamm- bzw. Brandschutzmaterial (Brandschutzadditive) gegebenenfalls mit nachfolgender Absaugvorrichtung zwischen Imprägniereinrichtung (Bindemittelauftragseinrichtung) und Trocknungseinrichtung relativ einfach und kostengünstig zu Fertigung slinien für die Herstellung des Dach- und Dichtungsbahnmaterial-Zwischenprodukts erweitert werden.

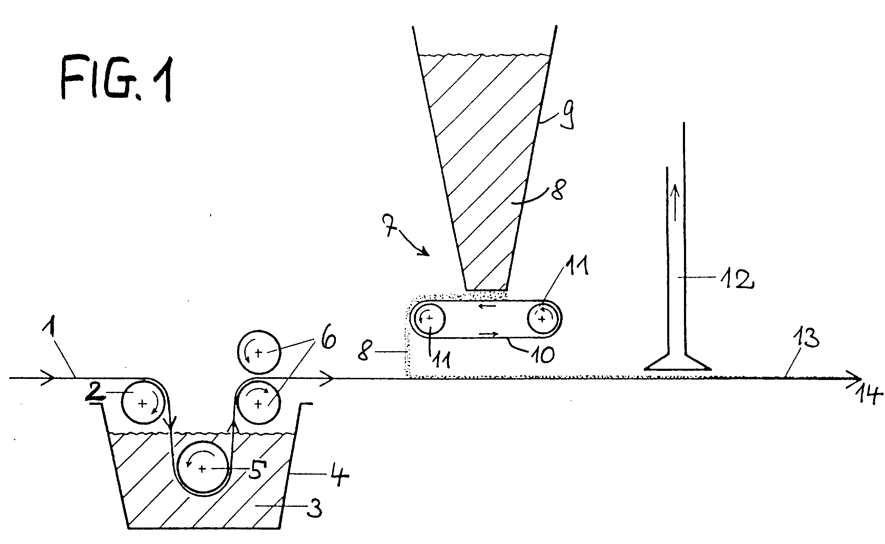

Bei einer ersten Ausführungsform dieses Verfahrens, wie sie in Fig. 1 veranschaulicht ist, wird als Auftrags- bzw. Aufstreueinrichtung eine konventionelle, handelsübliche Bestreuungseinrichtung mit Vorratsbunker und Streuband bzw. Streuwalze verwendet. Bei diesem Verfahren wird üblicherweise mit einem Überschuß an Bestreuungsmaterial gearbeitet, um die gewünschte, vollfächige Abdeckung zu erreichen. Da der nicht haftende Überschuß bei der nachfolgenden bzw. späteren Dach- und Dichtungsbahn-Herstellung als Trennmittel wirkt, was sich als mangelhafte Haftung der Deckmasse auf der Trägereinlage äußern würde, muß dieser Überschuß anschließend sorgfältig abgesaugt werden.

Wie Fig. 1 zeigt, wird bei dieser Ausführungsform des Verfahrens das nichtimprägnierte flächige, armierende Trägermaterial 1 (z.B. ein Rohvlies) als Trägermaterialbahn über eine Führungswalze 2 in eine, fluides Imprägniermaterial 3 zur Verbesserung der thermischen und/oder mechanischen Belastbarkeit (z.B. Dispersionsbinder) enthaltende Imprägnierpfanne 4 geführt und dort über eine hohle und gelochte Tauchwalze 5 durch das Imprägniermaterial 3 laufen gelassen. Das aus der Imprägnierpfanne 4 herauskommende imprägnierte Trägermaterial 1 durchläuft zwei Ausdrehwalzen 6, durch welche der Überschuß an im Trägermaterial 1 verbliebenem Imprägniermaterial 3 entfernt wird. Dann läuft das Trägermaterial 1 unter einem Bestreuungsstuhl 7 zum mechanischen Aufstreuen von pulverförmigem Flamm- bzw. Brandschutzmaterial 8 hindurch. Der Bestreuungsstuhl 7 umfaßt vorliegend einen trichterförmigen Vorratsbunker 9 für das Flamm- bzw. Brandschutzmaterial 8 und ein am unteren Ende Ende desselben angeordnetes endloses Streuband 10, das von Antriebswalzen 11 angetrieben wird und das aus dem Vorratsbunker 9 austretendes Flamm- bzw. Brandschutzmaterial 8 auf die mit dem Imprägniermaterial 3 klebrig gemachte Oberfläche des Trägermaterials 1 aufstreut. Danach läuft das bestreute Trägermaterial 1 unter einer Absaugvorrichtung 12 hindurch, die den Überschuß an flamm- bzw. Brandschutzmaterial 8 absaugt. Die so erhaltene Bahn aus brandhemmend ausgerüstetem Dach- und Dichtungsmaterial-Zwischenprodukt 13 wird dann, wie durch den Pfeil 14 angedeutet, zu einer Trockenanlage befördert und wird danach gegebenenfalls konfektioniert.

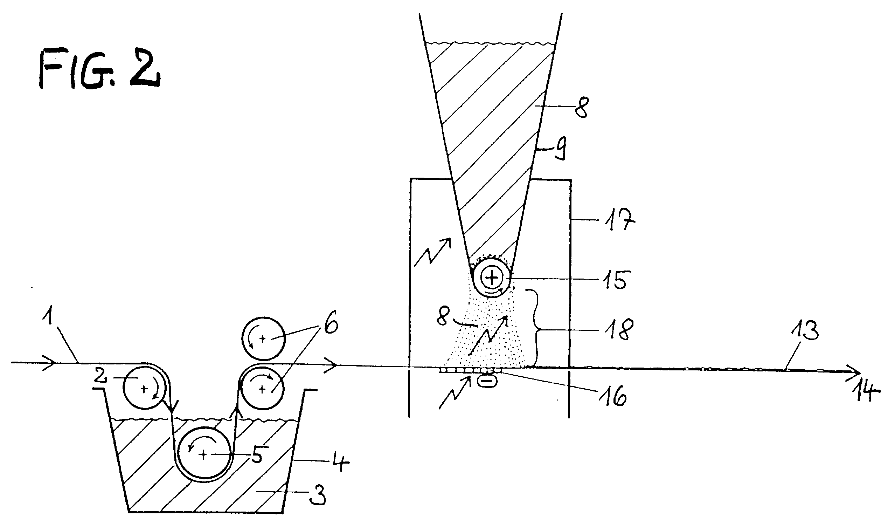

Bei einer zweiten Ausführungsform des oben unter (1) bis (6) angegebenen Verfahrens, wie sie in Fig. 2 veranschaulicht ist, erfolgt das Auftragen bzw. Aufstreuen des Flamm- bzw. Brandschutzmaterials in sehr vorteilhafter Weise durch Bestreuung im elektrostatischen Feld. Hierbei wird das imprägnierte Trägermaterial (Trägereinlage) als Minuspol negativ aufgeladen. Oberhalb des Trägermaterials wird ein Pluspol angeordnet. Zwischen diesen beiden Polen wird eine Hochspannung, z.B. von 40 bis 110 kV einstellbar, erzeugt. Das Bestreuungsmaterial wird am Pluspol vorbeigeführt und dabei elektrostatisch aufgeladen. Es wird dann im Hochspannungsfeld stark beschleunigt und gleichmäßig auf das mit Kleber (z.B. klebendem Imprägniermaterial) versehene Trägermaterial (Minuspol) aufgeschleudert. Die hohe Geschwindigkeit und die negativ aufgeladene Trägereinlage bewirken eine sehr haftfeste und gleichmäßige Bestreuung.

Trifft aufgeladenes Bestreuungsmaterial auf ein Areal, wo z.B. durch genügende Abstreuung kein Kleber zur Verfügung steht, wird es entladen and anschließend durch elektrostatische Anziehung wieder durch den Pluspol abgezogen. Durch diesen Effekt wird ein Überschuß an Streumaterial verhindert; eine nachgeschaltete Absaugung, wie bei konventioneller Bestreuung, ist nicht notwendig. Ebenfalls vorteilhaft ist bei dieser Ausführungsform, daß z.B. durch Veränderung der Stärke des elektrostatischen Feldes verschiedene Aufbringmengen leicht realilisert werden können.

Voraussetzung für das Funktionieren des Prozesses ist
(a) daß der Kleber bzw. das Imprägniermaterial bzw. die Trägereinlage elektrisch leitfähig sind, und
(b) daß das Flamm- bzw. Brandschutzmaterial elektrostatisch aufladbar ist bzw. durch ein geeignetes, Fachleuten bekanntes, Verfahren elektrostatisch aufladbar gemacht werden kann.

In der Fig. 2, die schematisch diese Ausführungsform zeigt, sind die gleichen Bezugszeichen wie in Fig. 1 verwendet, so daß insoweit, als das Verfahren sich nicht von demjenigen der Fig. 1 unterscheidet, auf die diesbezüglichen Erläuterungen zu Fig. 1 verwiesen wird. Abweichend von Fig. 1 ist gemäß Fig. 2 am unteren Ende des Vorratsbunkers 9 eine elektrisch positive, sich drehende Auftragswalze 15 über dem imprägnierten Trägermaterial 1 vorgesehen, während unter dem imprägnierten Trägermaterial 1 eine elektrisch negative Bürste 16 (Kathodenbürste) zum Aufladen des Trägermaterials 1 angeordnet ist. Durch das mittels einer Abdeckhaube 17 abgeschirmte elektrostatische Feld 18 wird das pulverförmige Flamm- bzw. Brandschutzmaterial 8 sehr haftfest und gleichmäßig auf das imprägnierte Trägermaterial 1 aufgebracht.

Die gemäß Fig. 1 oder 2 erhaltenen brandhemmend ausgerüsteten Dach- und Dichtungsbahnmaterial-Zwischenprodukte, d.h. mit Flamm- bzw. Brandschutzadditiven versehene Trägereinlagen, können direkt auf jeder herkömmlichen Produktionsstraße für Dach- und Dichtungsbahnen ohne jegliche Änderungen eingesetzt und zu einem fertigen erfindungsgemäßen Dach- und Dichtungsbahnmaterial verarbeitet werden.

Eine Ausführungsform des erfindungsgemäßen Verfahrens, mit welcher ein brandhemmend ausgerüstetes Dach- und Dichtungsbahnmaterial nach der Erfindung über das Zwischenprodukt hergestellt wird, umfaßt zusätzlich zu den obigen Verfahrensschritten (1) bis (6) die folgenden weiteren Verfahrensschritte:
(7) Imprägnieren des brandhemmend ausgerüsteten Dach- und Dichtungsbahnmaterial-Zwischenprodukts, beispielsweise des gemäß der Figur 1 oder 2 erhaltenen Zwischenprodukts, mit heißflüssigem Bitumen, vorzugsweise Polymerbitumen.
(8) Aufbringen einer Ober- und Unterschicht, beispielsweise von Polymerbitumen, auf das so bitumengetränkte Dach- und Dichtungsbahnmaterial-Zwischenprodukt, wobei die hierfür verwendete Deckmasse gleichzeitig als Klebemasse zu ihrem Verkleben mit dem vorgenannten Zwischenprodukt fungiert.
(9) Abdecken der Ober- und Unterseite des so erhaltenen brandhemmend ausgerüsteten Dach-und Dichtungsbahnmaterials mit Talkum, Sand, Schiefersplitt, Folie, Vlies oder anderem hierfür brauchbarem Material.
(10) Kühlen dieses Dach- und Dichtungsbahnmaterials.
(11) Konfektionieren des gekühlten Dach- und Dichtungsbahnmaterials, wie z.B. Ablängen auf handelsübliche Maße, Aufrollen, Einpacken, Palettieren o. dgl. zur fertigen Handelsware.

Ein besonderer Vorteil des erfindungsgemäßen Verfahrens liegt darin, daß Naht- und Stoßbereich von Dach- und Dichtungsbahnmaterialien, die nach dieser Technologie gefertigt werden, frei von Flamm- bzw. Brandschutzmitteln gehalten werden können. Die unbestreute Längsnaht erreicht man, indem die Abstreubreite entsprechend der vorgesehenen Randüberlappung schmäler ist als die Gesamtbreite des Dach- und Dichtungsbahnmaterials. Die flamm- bzw. brandschutzmittelfreie Quernaht erreicht man z.B. durch periodisches An- und Abschalten des Bestreuungsstuhls. Die nicht mit Additiven versehene Längsnahtüberlappung ist eine bevorzugte Ausführungsform der vorliegenden Erfindung. Die nicht ausgerüstete Quernahtüberlappung sollte bei dünnen, sowie bei nicht mit oberseitiger, mineralischer Abstreuung versehenen Bahnen vorgesehen werden. Bei dicken Bahnen mit mineralischer Abstreuung, wie z.B. Polymerbitumenbahnen - 5 mm dick - mit Polyestervlies-Trägereinlage sowie Schiefersplitt-Abdeckung, wirkt die oberseitige Abstreuung als hinreichender Hitzeschild, der die Temperaturbelastung in der Flamm- bzw. Brandschutzmittelebene unterhalb der Initialtemperatur dieser Chemikalien hält. Bei solchen Bahnen ist die nicht ausgerüstete Quernaht nicht notwendig (wobei "nicht ausgerüstet" bedeutet "frei von Flamm- bzw. Brandschutzmaterial").

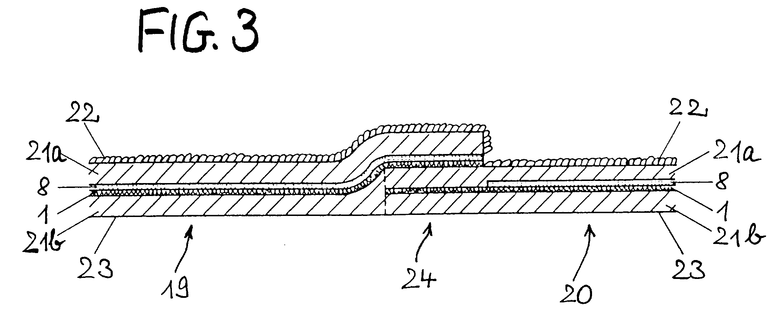

Die Figur 3 zeigt ein Ausführungsbeispiel eines Naht- und Stoßbereichs von zwei brandhemmend ausgerüsteten Dach- und Dichtungsbahnmaterialien 19, 20 im Querschnitt, die jeweils aus einem imprägnierten Trägermaterial 1, einer oberseitig darauf befindlichen Schicht aus Flamm- bzw. Brandschutzmaterial 8 und einer Oberschicht 21a und einer Unterschicht 21b sowie einer auf die Oberseite der Oberschicht 21a aufgebrachten Schicht aus mineralischem Bestreuungsmaterial 22 und einer auf der Unterseite der Unterschicht 21b vorgesehenen Abdeckfolie 23 bestehen.

Im Naht- und Stoßbereich 24, der als "Schweißraupe" dargestellt ist, d.h. bei dem die Unterschicht 21b des Dach- und Dichtungsbahnmaterials 19 mit der Ober- und Unterschicht 21a bzw. 21b des Dach- und Dichtungsbahnmaterials 20 verschweißt ist, ist das Dach- und Dichtungsbahnmaterial 20 von Flamm-bzw. Brandschutzmaterial 8 und auch von Bestreuungsmaterial 22 freigelassen.

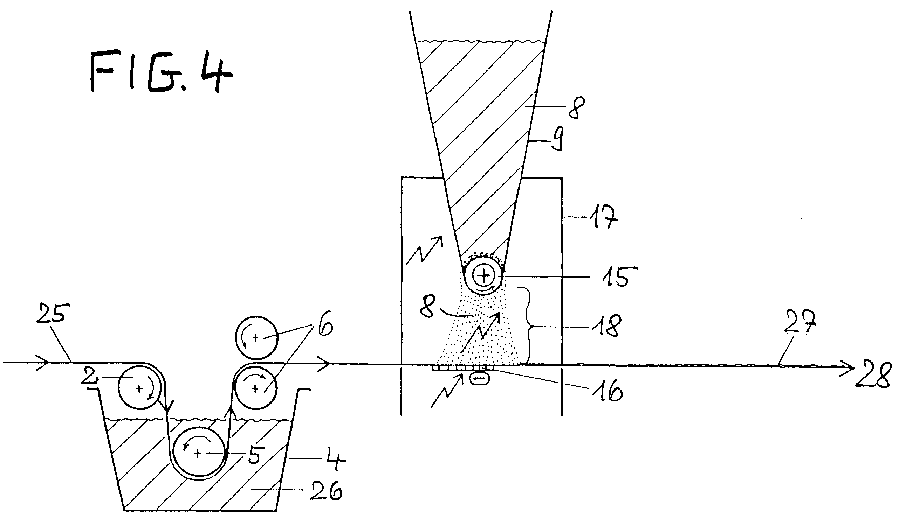

Schließlich sei nachstehend eine Ausführungsform des Verfahrens nach der Erfindung zum direkten Herstellen des erfindungsgemäßen brandhemmend ausgerüsteten Dach- und Dichtungsbahnmaterials angegeben, die schematisch und teilweise in Figur 4 dargestellt ist. In dieser Ausführungsform wird die Flamm- bzw. Brandschutzausrüstung nicht, wie vorher beschrieben, bei der Trägereinlagenproduktion, sondern direkt bei der Dach- und Dichtungsbahnmaterialproduktion realisiert. Zur Vermeidung von Wiederholungen wird dabei auf die obigen Verfahrensschritte Bezug genommen, soweit diese angewandt werden:
(A) Herstellen eines flächigen, imprägnierten armierenden Trägermaterials, welches kein Flamm- bzw. Brandschutzmaterial enthält, gemäß den obigen Verfahrensschritten (1) bis (3) und Trocknen dieses Trägermaterials, z.B. in einer Trockenkammer, sowie gegebenenfalls Konfektionieren desselben, so daß eine übliche Trägereinlage erhalten wird.
   Gegebenenfalls können der Verfahrensschritt (3) und das damit zusammenhängende Trocknen und/oder das Konfektionieren im Hinblick auf das im nächsten Verfahrensschritt erfolgende Imprägnieren weggelassen werden.
(B) Imprägnieren des erhaltenen Trägermaterials bzw. der erhaltenen Trägereinlage mit heißflüssigem Bitumen, insbesondere Polymerbitumen.
(C) Aufbringen eines Flamm- bzw. Brandschutzmaterials auf das bitumengetränkte Trägermaterial bzw. die bitumengetränkte Trägereinlage, in der Art und Weise, wie oben im Verfahrensschritt (4) und anhand der Figuren 1 und 2 angegeben.
(D) Aufbringen einer Ober- und Unterschicht auf das im Verfahrensschritt (C) erhaltene Material, Abdecken der Ober- und Unterseite des so erhaltenen brandhemmend ausgerüsteten Dach- und Dichtungsbahnmaterials mit Talkum o.dgl., und Kühlen sowie Konfektionieren in der Art und Weise, wie oben in den Verfahrensschritten (8) bis (11) angegeben ist.

Die Figur 4 veranschaulicht teilweise eine Produktionsanlage zur Durchführung dieses Verfahrens, wobei die gleichen Bezugszeichen wie in den Figuren 1 bis 3 für die gleichen Teile verwendet worden sind, so daß insoweit auf die obige Beschreibung verwiesen wird und nur Abweichungen erläutert werden.

Anders als in Figur 2 ist das in die Anlage der Figur 4 einlaufende bahnförmige Material kein rohes Trägermaterial (z.B. Rohvlies) sondern vielmehr eine Trägereinlage, d.h. ein, vorzugsweise mit Dispersionsbinder, imprägniertes Trägermaterial 25. Diese Trägereinlage 25 wird - anders als in Fig. 1 oder 2, wo sie mit Dispersonsbinder imprägniert wird - in der Imprägnierpfanne 4 mit heißflüssigem Bitumen 26, vorzugsweise Polymerbitumen, imprägniert. Am Ausgang der Anlage gemäß Figur 4 wird eine mit Flamm- bzw. Brandschutzmaterial 8 bestreute und fest verbundene bitumenimprägnierte Trägermaterialeinlage 27 erhalten, die zur Beschichtung mit Deckmasse d.h. zur Ausbildung der Ober- und Unterschicht, etc. weitergeführt wird, wie durch den Pfeil 28 angedeutet ist.

Zweckmäßigerweise ist die Bestreuungseinheit zum Aufbringen des Flamm- bzw. Brandschutzmaterials, wie in Figur 4 schematisch dargestellt, zwischen Imprägnierpfanne 4 und Belagsmassenpfanne (nicht gezeigt) angeordnet. Die Bestreuungseinheit kann, wie in den obigen Ausführungsformen beschrieben, z.B. konventionell oder auch elektrostatisch aufgebaut sein.

Als Kleber für die Bestreuung mit Flamm- bzw. Brandschutzmaterail dient hier das heißflüssige Imprägnierbitumen. Nach dem Bestreuungsvorgang werden die übrigen Produktionsschritte der Dach- und Dichtungsbahnenfertigung wie üblich durchlaufen. Bei der Variante mit nicht ausgerüsteter Kopfnaht sind lediglich z.B. optische Markierungen auf der Bahn zu schaffen, welche die nicht bestreuten Segmente bzw. Abschnitte auch äußerlich kenntlich machen.

Derartige Markierungen als solche sind Stand der Technik.

Diese Variante (direkte Herstellung des erfindungsgemäßen Dach- und Dichtungsbahnenmaterials) hat gegenüber den obigen Ausführungsformen (Herstellung über das Zwischenprodukt) der Erfindung den Vorteil, daß Mehrfachlagerhaltung an Einlagen, die mit verschiedenen Gehalten an Flamm- und Brandschutzmaterial ausgerüstet sind, vermieden wird. Vielmehr kann jede handelsübliche Trägereinlage nach Bedarf und Anforderung mit der entsprechenden Menge an Additiven (d.h. Flamm- bzw. Brandschutzmaterial) während der laufenden Produktion versehen werden.

Es ist bei dieser Ausführungsform lediglich so, daß nicht jede bestehende Anlage zur Dach- und Dichtungsbahnfertigung mit vertretbarem Aufwand zur Herstellung des erfindungsgemäßen Dach- und Dichtungsbahnmaterials nachgerüstet werden kann, was aber durch den vorstehenden Vorteil (keine Mehrfachlagerhaltung) bei weitem ausgeglichen wird.

Die nachfolgenden Beispiele und Vergleichsbeispiele sollen die Erfindung erläutern:

### Vergleichsbeispiel 1

Auf einer konventionellen Anlage zur Herstellung von bituminösen Dach- und Dichtungsbahnen wird eine Dach- und Dichtungsbahn nach DIN 52133- PYE PV 200 S5- hergestellt. Sie ist ca. 5,3 mm dick und besteht aus einem Polyestervlies, mit (Polymer-)Bitumen imprägniert, welches beidseitig mit SBS-modifiziertem Polymerbitumen beschichtet ist. Die Oberseite ist mit Schiefersplitt abgedeckt, die Unterseite mit einer Polypropylen-Folie kaschiert. Die Breite der Bahn beträgt ca. 1 m, die Rollenlänge beträgt 5 m. Der ca. 8 cm breite Kleberand (Längsnahtüberlappung) oberseitig ist ebenfalls mit einer Polypropylenfolie abgedeckt.

### Vergleichsbeispiel 2

Es wurde eine Dach- und Dichtungsbahn hergestellt wie in Vergleichsbeispiel 1 beschrieben, als Trägereinlage diente hier jedoch ein handelsübliches, aluminiumkaschiertes Polyestervlies mit einem Flächengewicht von ca. 290 g/m².

### Beispiel 1

Es wurde eine Dach- und Dichtungsbahn hergestellt wie in Vergleichsbeispiel 1 beschrieben. Wie in der Ausführungsform der vorliegenden Erfindung in Verbindung mit Fig. 4 beschrieben, wurde die Bahn während der Produktion mit einem handelsüblichen intumeszierenden sowie gasentwickelnden Flamm- bzw. Brandschutzmaterial ausgerüstet. Der Kleberand wurde frei von Additiven (Flamm- bzw. Brandschutzmaterial) gehalten. Mit einer elektrostatischen Auftragseinheit, mobil, wurden ca. 70 g Additiv pro m² auf die mit Heißbitumen imprägnierte Trägereinlage aufgestreut; ansonsten wurde keine Änderung am Produktionsablauf vorgenommen.

### Vergleichsbeispiel 3

Es wurde eine Dach- und Dichtungsbahn hergestellt nach DIN 52133 Typ PYP PV 200 SS. Die Bahn ist ca. 5,5 mm dick, die Polyestervlieseinlage ist mit Polymerbitumen getränkt, die Deckmasse besteht aus APAO-modifiziertem Bitumen (APAO = Ataktisches Poly-Alpha-Olefin). Die übrige Ausführung entspricht derjenigen von Vergleichsbeispiel 1.

### Vergleichsbeispiel 4

Es wurde eine Dach- und Dichtungsbahn hergestellt, wie in Vergleichsbeispiel 3 beschrieben. Als Trägereinlage wurde jedoch ein handelsübliches Polyestervlies verwandt, das mit einem Glasvlies zusätzlich kaschiert war.

### Beispiel 2

Es wurde eine Dach- und Dichtungsbahn hergestellt wie in Vergleichsbeispiel 3 angegeben. Während der Produktion wurde, wie in Beispiel 1 beschrieben, ca. 50 g Flamm- bzw. Brandschutzmaterial pro m² auf die imprägnierte Trägereinlage aufgestreut.

Mit den nach den vorstehenden Beispielen und Vergleichsbeispielen hergestellten Dach- und Dichtungsbahnen wurde je ein leichter Flachdachaufbau, bestehend aus einem Stahltrapezblech, Polystyrol-Dämmplatten 120 mm stark sowie der entsprechenden Dach- und Dichtungsbahn hergestellt. Die Nähte der Dach- und Dichtungsbahnen wurden mit einem handelsüblichen Heißluftgerät durch Verschweißen verschlossen; die Dachhaut wurde mechanisch am Untergrund (Trapezblech) fixiert.

Mit diesem Dachaufbau wurden Prüfungen zum Brandwiderstand nach
(1) DIN 4102 Teil 7
(2) Nordtest Nr. 6
(3) "T 30"-Test (Frankreich)
durchgeführt.

Die Ergebnisse sind in Tabelle 1 zusammengefaßt.

Wie aus der Tabelle 1 ersichtlich ist, erfüllen nur die nach den erfindungsgemäßen Verfahren hergestellten Bahnen alle möglichen Testanforderungen. Bei den Prüfungen nach DIN 4102 Teil 7 bei 45° Dachneigung wurde deutlich, daß auf Art und Menge der Brandschutzadditive besondere Obacht gegeben werden muß, um auch diese Prüfung sicher zu bestehen.

Was die Flamm- bzw. Brandschutzmaterialialien anbetrifft, so sind für die Zwecke der vorliegenden Erfindung besonders Intumeszensmaterialien geeignet. Solche Zubereitungen sind im Handel erhältlich, z.B. unter den Handelsnamen Exolit, Hostaflam, Sigraflex, Expagraph, Solem ATH, Zerogen, Fomox, Taien S. Die obigen Beispiele wurden beide mit Sigraflex durchgeführt, um Vergleichbarkeit zu gewährleisten.

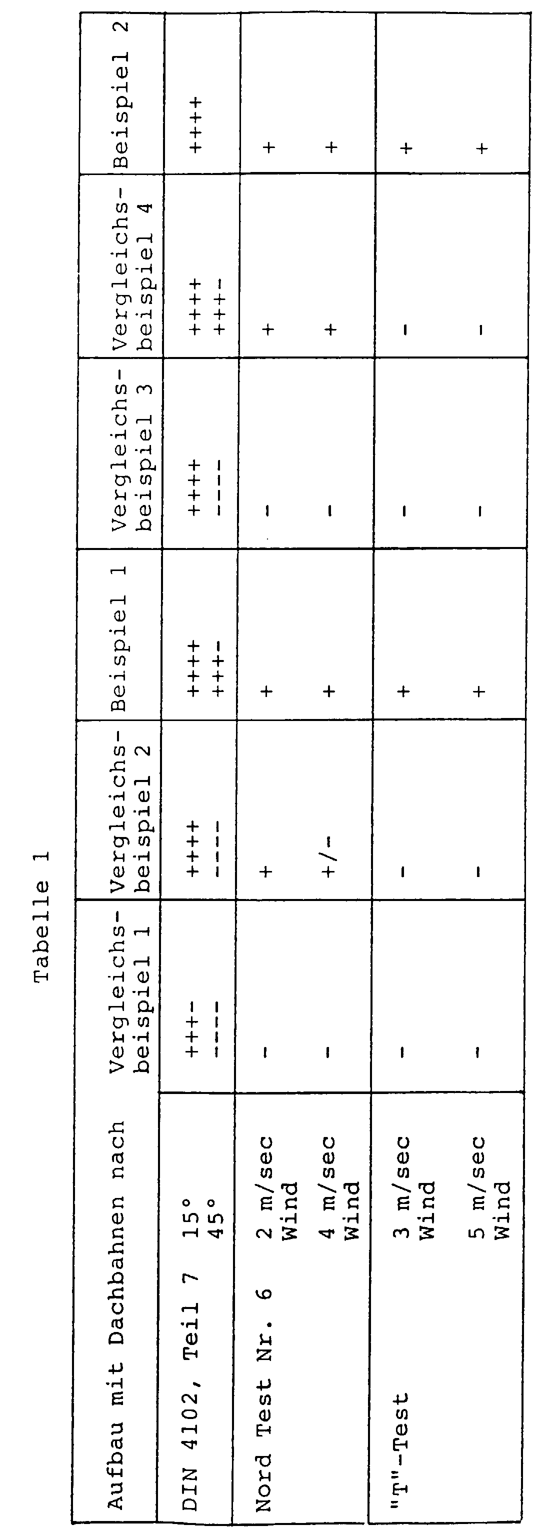

## Patentansprüche

1. Brandhemmend ausgerüstetes Dach- und Dichtungsbahnmaterial (19, 20), umfassend:
(a) ein armierendes Trägermaterial (1) aus thermoplastischem Kunststoff;
(b) ein die thermische und/oder mechanische Belastbarkeit des armierenden Trägermaterials (1) erhöhendes Imprägniermaterial (3, 26), mit welchem das armierende Trägermaterial (1) imprägniert ist;
(c) ein Flamm- bzw. Brandschutzmaterial (8), das auf die Oberseite des armierenden Trägermaterials (1) aufgebracht und so gewählt ist, daß es erst bei 300°C oder einer darüber liegenden Temperatur wirksam wird;
(d) eine unterseitig auf dem mit dem Flamm- bzw. Brandschutzmaterial (8) versehenen, imprägnierten Trägermaterial (1) befindliche schweißbare Unterschicht (21b) aus Polymerbitumen, dessen Kunststoffgehalt maximal 35 Gew.-% beträgt, und die gegebenenfalls einen oder mehrere Füllstoffe enthält; und
(e) eine oberseitig auf dem mit dem Flamm- bzw. Brandschutzmaterial (8) versehenen, imprägnierten Trägermaterial (1) befindliche Oberschicht (21a) aus einem oder mehreren aus der aus Bitumen, Polymerbitumen, plastomerem Kunststoff und elastomerem Kunststoff bestehenden Gruppe ausgewählten Materialien, wobei die Oberschicht (21a) gegebenenfalls einen oder mehrere Füllstoffe enthält.

2. Brandhemmend ausgerüstetes Dach- und Dichtungsbahnmaterial (19, 20) nach Anspruch 1, dadurch **gekennzeichnet,** daß der thermoplastische Kunststoff Polyester und/oder Polyamid ist.

3. Brandhemmend ausgerüstetes Dach- und Dichtungsbahnmaterial (19, 20) nach Anspruch 1 oder 2, dadurch **gekennzeichnet,** daß das armierende Trägermaterial (1) ein textiles oder textilartiges Flächengebilde ist, insbesondere ein Vlies, Gelege, Gewebe, Gewirk oder Gestrick oder eine Kombination von mehreren dieser Flächengebildearten, wie bevorzugt ein Vlies/Gelege- oder Vlies/Gewirk-Kombinationsträgermaterial.

4. Brandhemmend ausgerüstetes Dach- und Dichtungsbahnmaterial (19, 20) nach Anspruch 1, 2 oder 3, dadurch **gekennzeichnet,** daß das Flamm- bzw. Brandschutzmaterial (8) ein intumeszierendes und/oder gasentwickelndes Flamm- bzw. Brandschutzmaterial ist.

5. Brandhemmend ausgerüstetes Dach- und Dichtungsbahnmaterial (19, 20) nach einem der Ansprüche 1 bis 4, dadurch **gekennzeichnet,** daß das Flamm- bzw. Brandschutzmaterial (8) in einer Menge von 20 bis 120 g/m², vorzugsweise in einer Menge von 40 bis 80 g/m², auf die Oberseite des armierenden Trägermaterials (1) aufgebracht ist.

6. Brandhemmend ausgerüstetes Dach- und Dichtungsbahnmaterial (19, 20) nach einem der Ansprüche 1 bis 5, dadurch **gekennzeichnet,** daß das Flamm- bzw. Brandschutzmaterial (8) mit einem Klebemittel aufgebracht ist.

7. Brandhemmend ausgerüstetes Dach- und Dichtungsbahnmaterial (19, 20) nach einem der Ansprüche 1 bis 6, dadurch **gekennzeichnet,** daß das Imprägniermaterial (3, 26) ein verstärkender Binder (3) und/oder ein Bitumen (26), vorzugsweise ein Polymerbitumen, ist.

8. Brandhemmend ausgerüstetes Dach- und Dichtungsbahnmaterial (19, 20) nach einem der Ansprüche 1 bis 7, dadurch **gekennzeichnet,** daß das Imprägniermaterial (3, 26) gleichzeitig Klebemittel zum Aufbringen des Flamm- bzw. Brandschutzmaterials (8) auf die Oberseite des armierenden Trägermaterials (1) ist.

9. Brandhemmend ausgerüstetes Dach- und Dichtungsbahnmaterial (19, 20) nach einem der Ansprüche 1 bis 8, dadurch **gekennzeichnet,** daß die Ober- und/oder Unterseite des Dach- und Dichtungsbahnmaterials (19, 20) mit einem mineralischen Bestreuungsmaterial (22) abgestreut oder mit einer Abdeckfolie (23) versehen ist.

10. Brandhemmend ausgerüstetes Dach- und Dichtungsbahnmaterial (19, 20) nach einem der Ansprüche 1 bis 9, dadurch **gekennzeichnet,** daß ein Teil des armierenden Trägermaterials (1), der einem Naht- oder Stoßbereich (24) des fertigen Dach- und Dichtungsbahnmaterials (19, 20) entspricht, von Flamm- bzw. Brandschutzmaterial (8) und/oder von mineralischem Bestreuungsmaterial (22) freigelassen ist.

11. Brandhemmend ausgerüstetes Dach- und Dichtungsbahnmaterial (19, 20) nach einem der Ansprüche 1 bis 10, dadurch **gekennzeichnet,** daß der plastomere oder elastomere Kunststoff aus der Gruppe ausgewählt ist, die aus Polyvinylchlorid, Polyisobutylen, Polyethylen, Polypropylen, Ethylen-Propylen-Dien-Kautschuk, Styrol-Butadien-Styrol, Isopren-Kautschuk, Butyl-Kautschuk, chloriertem Polyethylen besteht.

12. Brandhemmend ausgerüstetes Dach- und Dichtungsbahnmaterial (19, 20) nach einem der Ansprüche 1 bis 11, dadurch **gekennzeichnet,** daß das Polymerbitumen der Oberschicht (21a) und/oder der Unterschicht (21b) ein Ethylen-Copolymerisat-Bitumen ist.

13. Brandhemmend ausgerüstetes Dach- und Dichtungsbahnmaterial (19, 20) nach einem der Ansprüche 1 bis 12, dadurch **gekennzeichnet,** daß der Kunststoffgehalt des Polymerbitumens der Oberschicht (21a) maximal 35 Gew.-% beträgt.

14. Verfahren zur Herstellung eines brandhemmend ausgerüsteten Dach- und Dichtungsbahnmaterials (19, 20) nach einem der Ansprüche 1 bis 13, umfassend die folgenden Verfahrensschritte:
(a) Imprägnieren des armierenden Trägermaterials (1) mit einem dessen thermische und/oder mechanische Belastbarkeit erhöhenden Imprägniermaterial (3, 26);
(b) Aufbringen eines Flamm- bzw. Brandschutzmaterials (8) auf die Oberseite des imprägnierenden Trägermaterials (1); und
(c) Aufbringen der Ober- und Unterschicht (21a, 21b) auf das imprägnierte und oberseitig mit dem Flamm- und Brandschutzmaterial (8) versehene Trägermaterial (1).

15. Verfahren nach Anspruch 14, dadurch **gekennzeichnet,** daß das Trägermaterial (1) im Verfahrensschritt (a) zunächst mit einem verstärkenden Binder (3) und dann mit einem Bitumen (26), vorzugsweise Polymerbitumen, oder einem Unter- oder Oberschichtmaterial imprägniert wird.

16. Verfahren nach Anspruch 15, dadurch **gekennzeichnet,** daß zwischen dem Imprägnieren mit einem verstärkenden Binder (3) und dem Imprägnieren mit Bitumen (26), vorzugsweise Polymerbitumen, oder mit einem Unter- oder Oberschichtmaterial das imprägnierte Trägermaterial (1) getrocknet wird.

17. Verfahren zur Herstellung eines brandhemmend ausgerüsteten Dach- und Dichtungsbahnmaterials nach einem der Ansprüche 1 bis 13, mit einem ersten Verfahrensteil zur Herstellung eines Dach- und Dichtungsbahnmaterial-Zwischenprodukts (13) und einem zweiten Verfahrensteil zur Weiterverarbeitung des Dach- und Dichtungsbahnmaterial-Zwischenprodukts (13) zu dem Dach- und Dichtungsbahnmaterial (19, 20);
wobei der erste Verfahrensteil die folgenden Verfahrensschritte umfaßt:
(a) Imprägnieren des armierenden Trägermaterials (1) mit einem dessen thermische und/oder mechanische Belastbarkeit erhöhenden Imprägniermaterial (3), und
(b) Aufbringen des Flamm- bzw. Brandschutzmaterials (8) auf die Oberseite des imprägnierten Trägermaterials (1);
und wobei der zweite Verfahrensteil die folgenden weiteren Verfahrensschritte umfaßt:
(c) Imprägnieren des Dach- und Dichtungsbahnmaterial-Zwischenprodukts (13) mit Bitumen (26), vorzugsweise Polymerbitumen, oder einem Unter- oder Oberschichtmaterial; und
(d) Aufbringen der Unter- und Oberschicht (21a, 21b) auf das mit Bitumen (26), vorzugsweise Polymerbitumen, oder einem Unter- oder Oberschichtmaterial imprägnierte Dach- und Dichtungsbahnmaterial-Zwischenprodukt (13).

18. Verfahren nach Anspruch 17, dadurch **gekennzeichnet,** daß das Trägermaterial (1) im Verfahrensschritt (a) mit einem verstärkenden Binder (3) imprägniert wird.

19. Verfahren nach Anspruch 17 oder 18, dadurch **gekennzeichnet,** daß nach dem Verfahrensschritt (b) ein Trocknen als weiterer Verfahrensschritt durchgeführt wird.

20. Verfahren nach Anspruch 17, 18 oder 19, dadurch **gekennzeichnet,** daß als letzter Verfahrensschritt des ersten Verfahrensteils ein Konfektionieren durchgeführt wird.

21. Verfahren nach einem der Ansprüche 14 bis 20, dadurch **gekennzeichnet,** daß nach dem Verfahrensschritt des Aufbringens der Unter- und Oberschicht (21a, 21b) die Ober- und/oder Unterseite des Dach- und Dichtungsbahnmaterials (19, 20) mit einem mineralischen Bestreuungsmaterial (22) abgestreut oder mit einer Abdeckfolie (23) versehen wird.

22. Verfahren nach Anspruch 21, dadurch **gekennzeichnet,** daß nach dem Abstreuen das Dach- und Dichtungsbahnmaterial (19, 20) gekühlt und gegebenenfalls konfektioniert wird.

23. Verfahren nach einem der Ansprüche 14 bis 22, dadurch **gekennzeichnet,** daß als Flamm- bzw. Brandschutzmaterial (8) ein intumeszierendes und/oder gasentwickelndes Flamm- bzw. Brandschutzmaterial auf die Oberseite des armierenden Trägermaterials (1) aufgebracht wird.

24. Verfahren nach einem der Ansprüche 14 bis 23, dadurch **gekennzeichnet,** daß das Flamm- bzw. Brandschutzmaterial (8) in einer Menge von 20 bis 120 g/m², vorzugsweise in einer Menge von 40 bis 80 g/m², auf die Oberseite des armierenden Trägermaterials (1) aufgebracht wird.

25. Verfahren nach einem der Ansprüche 14 bis 24, dadurch **gekennzeichnet,** daß das Flamm- bzw. Brandschutzmaterial (8) durch mechanisches Bestreuen auf die Oberseite des imprägnierten Trägermaterials (1) aufgebracht wird.

26. Verfahren nach einem der Ansprüche 14 bis 25, dadurch **gekennzeichnet,** daß das Flamm- bzw. Brandschutzmaterial (8) durch Bestreuung im elektrostatischen Feld (18) auf das imprägnierte Trägermaterial (1) aufgebracht wird.

27. Verfahren nach einem der Ansprüche 14 bis 26, dadurch **gekennzeichnet,** daß das Flamm- bzw. Brandschutzmaterial (8) mit einem Klebemittel an der Oberseite des imprägnierenden Trägermaterials (1) haftend angebracht wird.

28. Verfahren nach Anspruch 27, dadurch **gekennzeichnet,** daß als Klebemittel zum haftenden Anbringen des Flamm- bzw. Brandschutzmaterials (8) an der Oberseite des Trägermaterials (1) das Imprägniermaterial (3, 26) verwendet wird.

29. Verfahren nach Anspruch 27 oder 28, dadurch **gekennzeichnet,** daß der an der Oberseite des imprägnierten Trägermaterials (1) nicht haftende Überschuß an Flamm- bzw. Brandschutzmaterial (8) entfernt, vorzugsweise abgesaugt, wird.

30. Verfahren nach einem der Ansprüche 14 bis 29, dadurch **gekennzeichnet,** daß das armierende Trägermaterial (1) ein textiles oder textilartiges Flächengebilde ist, insbesondere ein Vlies, Gelege, Gewebe, Gewirk oder Gestrick oder eine Kombination von mehreren dieser Flächengebildearten, wie bevorzugt ein Vlies/Gelege- oder Vlies/Gewirk-Kombinationsträgermaterial.

31. Verfahren nach einem der Ansprüche 14 bis 30, dadurch **gekennzeichnet,** daß ein Teil des armierenden Trägermaterials (1), der einem Naht- oder Stoßbereich (24) des fertigen Dach- und Dichtungsbahnmaterials (19, 20) entspricht, von Flamm- bzw. Brandschutzmaterial (8) und/oder mineralischem Bestreuungsmaterial (22) freigelassen wird.

## Claims

1. A roofing and sealing strip material (19, 20), treated to impart fire-retardancy, comprising:
(a) a reinforcing support material (1) made of synthetic thermoplastic material;
(b) an impregnation material (3, 26) which increases the thermal and/or mechanical loading capacity of the reinforcing support material (1) and with which the reinforcing support material (1) is impregnated;
(c) a flame- or fire-protection material (8) which is applied to the upper side of the reinforcing support material (1) and which is selected so that it does not become effective until 300°C or a temperature above this;
(d) a weldable lower layer (21b) of polymer bitumen, which is situated on the underside of the impregnated support material (1) provided with the flame- or fire-protection material (8), the maximum content of synthetic material of which lower layer is 35 % by weight, and which optionally contains one or more fillers; and
(e) an upper layer (21a) which comprises one or more materials selected from the group consisting of bitumen, polymer bitumen, plastomeric synthetic material and elastomeric synthetic material, and which is situated on the upper side of the impregnated support material (1) provided with the flame- or fire-protection material (8), wherein the upper layer (21a) optionally contains one or more fillers.

2. A roofing and sealing strip material (19, 20), treated to impart fire-retardancy, according to claim 1, characterised in that the synthetic thermoplastic material is polyester and/or polyamide.

3. A roofing and sealing strip material (19, 20), treated to impart fire-retardancy, according to claim 1 or 2, characterised in that the reinforcing support material (1) is a textile or textile-like sheet formation, particularly a fibrous web, lay-up, woven fabric or knitted fabric or a combination of a plurality of these types of sheet formations, such as preferably a fibrous web/lay-up or fibrous web/knitted fabric combination support material.

4. A roofing and sealing strip material (19, 20), treated to impart fire-retardancy, according to claims 1, 2 or 3, characterised in that the flame- or fire-protection material (8) is an intumescent and/or gas-evolving flame- or fire-protection material.

5. A roofing and sealing strip material (19, 20), treated to impart fire-retardancy, according to any one of claims 1 to 4, characterised in that the flame- or fire-protection material (8) is applied in an amount of 20 to 120 g/m², preferably in an amount of 40 to 80 g/m², to the upper side of the reinforcing support material (1).

6. A roofing and sealing strip material (19, 20), treated to impart fire-retardancy, according to any one of claims 1 to 5, characterised in that the flame- or fire-protection material (8) is applied with an adhesive.

7. A roofing and sealing strip material (19, 20), treated to impart fire-retardancy, according to any one of claims 1 to 6, characterised in that the impregnation material (3, 26) is a reinforcing binder (3) and/or a bitumen (26), preferably a polymer bitumen.

8. A roofing and sealing strip material (19, 20), treated to impart fire-retardancy, according to any one of claims 1 to 7, characterised in that the impregnation material (3, 26) is at the same time an adhesive for applying the flame- or fire-protection material (8) to the upper side of the reinforcing support material (1).

9. A roofing and sealing strip material (19, 20), treated to impart fire-retardancy, according to any one of claims 1 to 8, characterised in that the upper and/or underside of the roofing and sealing strip material (19, 20) is sprinkled with a mineral scattering material (22) or is provided with a cover sheet (23).

10. A roofing and sealing strip material (19, 20), treated to impart fire-retardancy, according to any one of claims 1 to 9, characterised in that part of the reinforcing support material (1), which corresponds to a seam or butt joint region (24) of the finished roofing and sealing strip material (19, 20), is left free from flame- or fire-protection material (8) and/or from mineral scattering material (22).

11. A roofing and sealing strip material (19, 20), treated to impart fire-retardancy, according to any one of claims 1 to 10, characterised in that the plastomeric or elastomeric synthetic material is selected from the group consisting of polyvinyl chloride, polyisobutylene, polyethylene, polypropylene, ethylene-propylene-diene rubber, styrene-butadiene-styrene, isoprene rubber, butyl rubber and chlorinated polyethylene.

12. A roofing and sealing strip material (19, 20), treated to impart fire-retardancy, according to any one of claims 1 to 11, characterised in that the polymer bitumen of the upper layer (21a) and/or of the lower layer (21b) is an ethylene copolymer bitumen.

13. A roofing and sealing strip material (19, 20), treated to impart fire-retardancy, according to any one of claims 1 to 12, characterised in that the maximum content of synthetic material of the polymer bitumen of the upper layer (21a) is 35 % by weight.

14. A process for producing a roofing and sealing material (19, 20), treated to impart fire-retardancy, according to any one of claims 1 to 13, comprising the following process steps:
(a) impregnating the reinforcing support material (1) with an impregnation material (3; (26) which increases the thermal and/or mechanical loading capacity thereof;
(b) applying a flame- or fire-protection material (8) to the upper side of the impregnated support material (1); and
(c) applying the upper and lower layers (21a, 21b) to the impregnated support material (1) which is provided on its upper side with the flame- and fire-protection material (8).

15. A process according to claim 14, characterised in that in process step (a) the support material (1) is impregnated firstly with a reinforcing binder (3) and then with a bitumen (26), preferably a polymer bitumen, or with an upper or lower layer material.

16. A process according to claim 15, characterised in that the impregnated support material (1) is dried between the impregnation with a reinforcing binder (3) and the impregnation with bitumen (26), preferably polymer bitumen, or with a lower or upper layer material.

17. A process for produce a roofing and sealing strip material, which is treated to impart fire-retardancy, according to any one of claims 1 to 13, having a first process part for produce a roofing and sealing strip material intermediate (13) and a second process part for further processing the roofing and sealing strip material intermediate (13) to form the roofing and sealing strip material (19; 20);
wherein the first process part comprises the following process steps:
(a) impregnating the reinforcing support material (1) with an impregnation material (3) which increases the thermal and/or mechanical loading capacity thereof, and
(b) applying the flame- or fire-protection material (8) to the upper side of the impregnated support material (1);
and wherein the second process part comprises the following further process steps:
(c) impregnating the roofing and sealing strip material intermediate (13) with bitumen (26), preferably polymer bitumen, or with a lower or upper layer material; and
(d) applying the lower and upper layers (21a, 21b) to the roofing and sealing strip material intermediate (13) which is impregnated with bitumen (26), preferably polymer bitumen, or with a lower or upper layer material.

18. A process according to claim 17, characterised in that in process step (a) the support material (1) is impregnated with a reinforcing binder (3).

19. A process according to claim 17 or 18, characterised in that drying is effected as a further process step after process step (b).

20. A process according to claims 17, 18 or 19, characterised in that a making-up operation is performed as the last process step of the first process part.

21. A process according to any one of claims 14 to 20, characterised in that after the process step of applying the lower and upper layers (21a, 21b), the upper and/or underside of the roofing and sealing strip material (19, 20) is sprinkled with a mineral scattering material (22) or is provided with a cover sheet (23).

22. A process according to claim 21, characterised in that after the sprinkling operation the roofing and sealing strip material (19, 20) is cooled and optionally made up.

23. A process according to any one of claims 14 to 22, characterised in that an intumescent and/or gas-evolving flame- or fire-protection material is applied as a flame-or fire-protection material (8) to the upper side of the reinforcing support material (1).

24. A process according to any one of claims 14 to 23, characterised in that the flame-or fire-protection material (8) is applied in an amount of 20 to 120 g/m², preferably in an amount of 40 to 80 g/m², to the upper side of the reinforcing support material (1).

25. A process according to any one of claims 14 to 24, characterised in that the flame-or fire-protection material (8) is applied by mechanical scattering to the upper side of the impregnated support material (1).

26. A process according to any one of claims 14 to 25, characterised in that the flame-or fire-protection material (8) is applied to the impregnated support material (1) by scattering in an electrostatic field (18).

27. A process according to any one of claims 14 to 26, characterised in that the flame-or fire-protection material (8) is adhesively applied to the upper side of the impregnated support material (1) using an adhesive.

28. A process according to claim 27, characterised in that the impregnation material (3, 26) is used as the adhesive for adhesively applying the flame- or fire-protection material (8) to the upper side of the support material (1).

29. A process according to claim 27 or 28, characterised in that the excess of flame- or fire-protection material (8) which does not adhere to the upper side of the impregnated support material (1) is removed, preferably by suction.

30. A process according to any one of claims 14 to 29, characterised in that the reinforcing support material (1) is a textile or textile-like sheet formation, particularly a fibrous web, lay-up or knitted fabric or a combination of a plurality of these sheet formations, such as preferably a fibrous web/lay-up or fibrous web/knitted fabric combination support material.

31. A process according to any one of claims 14 to 30, characterised in that part of the reinforcing support material (1), which corresponds to a seam or butt joint region (24) of the finished roofing and sealing strip material (19, 20), is left free from flame- or fire-protection material (8) and/or mineral scattering material (22).

## Revendications

1. Matériau ignifugé en feuille pour toitures et étanchéification (19, 20) comprenant :
(a) un matériau support d'armature (1) en matière thermomoplastique ;
(b) un matériau d'imprégnation (3, 26) qui augmente la résistance du matériau support d'armature (1) vis-à-vis d'une charge thermique et/ou mécanique, au moyen duquel le matériau support d'armature (1) est imprégné ;
(c) un matériau pare-flammes et coupe-feu (8) qui est appliqué sur la face supérieure du matériau support d'armature (1) et est choisi de manière telle qu'il ne devient actif qu'à 300°C ou à une température supérieure à 300°C ;
(d) une couche inférieure (21b) en béton polymère, soudable, située sur la face inférieure du matériau support (1) imprégné et pourvu du matériau pare-flammes et coupe-feu (8), dont la teneur maximale en matière plastique est de 35 % en poids, et qui contient éventuellement un ou plusieurs matériaux de charge ; et
(e) une couche supérieure (21a) située sur la face supérieure du matériau support (1) imprégné et pourvu du matériau pare-flammes et coupe-feu (8), constituée par ou plusieurs matériaux choisis dans l'ensemble formé par le bitume, le bitume à base de polymère, les matières plastomères et les matières élastomères, la couche supérieure (21a) contenant éventuellement un ou plusieurs matériaux de charge.

2. Matériau ignifugé en feuille pour toitures et étanchéification (19, 20) selon la revendication 1, caractérisé en ce que la matière thermoplastique est un polyester et/ou un polyamide.

3. Matériau ignifugé en feuille pour toitures et étanchéification (19, 20) selon la revendication 1 ou 2, caractérisé en ce que le matériau support d'armature (1) est une structure plane textile ou du type textile, en particulier un non-tissé, un tissé, un tissu, un tissu à mailles ou tricoté ou une combinaison de plusieurs de ces types de structures planes, comme, de préférence, un matériau support formé de la combinaison d'un non-tissé et d'un tissé ou d'un non-tissé et d'un tissu à mailles.

4. Matériau ignifugé en feuille pour toitures et étanchéification (19, 20) selon la revendication 1, 2 ou 3, caractérisé en ce que le matériau pare-flammes et coupe-feu (8) est un matériau pare-flammes et coupe-feu intumescent et/ou qui dégage du gaz.

5. Matériau ignifugé en feuille pour toitures et étanchéification (19, 20) selon l'une des revendications 1 à 4, caractérisé en ce que le matériau pare-flammes et coupe-feu (8) est appliqué sur la face supérieure du matériau support d'armature (1) en une quantité de 20 à 120 g/m², de préférence en une quantité de 40 à 80 g/m².

6. Matériau ignifugé en feuille pour toitures et étanchéification (19, 20) selon l'une des revendications 1 à 5, caractérisé en ce que le matériau pare-flammes et coupe-feu (8) est appliqué avec une colle.

7. Matériau ignifugé en feuille pour toitures et étanchéification (19, 20) selon l'une des revendications 1 à 6, caractérisé en ce que le matériau d'imprégnation (3, 26) est un liant de renfort (3) et/ou un bitume (26), de préférence un bitume à base de polymère.

8. Matériau ignifugé en feuille pour toitures et étanchéification (19, 20) selon l'une des revendications 1 à 7, caractérisé en ce que le matériau d'imprégnation (3, 26) constitue en même temps une colle servant à appliquer le matériau pare-flammes et coupe-feu (8) sur la face supérieure du matériau support d'armature (1).

9. Matériau ignifugé en feuille pour toitures et étanchéification (19, 20) selon l'une des revendications 1 à 8, caractérisé en ce que la face supérieure et/ou la face inférieure du matériau en feuille pour toitures et étanchéification (19, 20) sont recouvertes d'un matériau minéral à saupoudrer (22) ou pourvues d'une feuille de recouvrement (23).

10. Matériau ignifugé en feuille pour toitures et étanchéification (19, 20) selon l'une des revendications 1 à 9, caractérisé en ce qu'une partie du matériau support d'armature (1), qui correspond à une zone de couture ou de jointure (24) du matériau fini en feuille pour toitures et étanchéification (19, 20), est laissée exempte de matériau pare-flammes et coupe-feu (8) et/ou de matériau minéral à saupoudrer (22).

11. Matériau ignifugé en feuille pour toitures et étanchéification (19, 20) selon l'une des revendications 1 à 10, caractérisé en ce que la matière plastomère ou élastomère est choisie dans l'ensemble constitué par le chlorure de polyvinyle, le polyisobutylène, le polyéthylène, le polypropylène, un caoutchouc d'éthylène-propylène-diène, le styrène-butadiène-styrène, un caoutchouc à base d'isoprène, le butylcaoutchouc et le polyéthylène chloré.

12. Matériau ignifugé en feuille pour toitures et étanchéification (19, 20) selon l'une des revendications 1 à 11, caractérisé en ce que le polymère à base de polymère de la couche supérieure (21a) et/ou de la couche inférieure (21b) est un bitume à base de copolymère éthylénique.

13. Matériau ignifugé en feuille pour toitures et étanchéification (19, 20) selon l'une des revendications 1 à 12, caractérisé en ce que la teneur en matière plastique du bitume à base de polymère de la couche supérieure (21a) est d'au plus 35 % en poids.

14. Procédé de fabrication d'un matériau ignifugé en feuille pour toitures et étanchéification (19, 20) selon l'une des revendications 1 à 13, comprenant les étapes suivantes de procédé :
(a) l'imprégnation du matériau support d'armature (1) avec un matériau d'imprégnation (3, 26) qui augmente la résistance de celui-ci vis-à-vis d'une charge thermique et/ou mécanique ;
(b) l'application d'un matériau pare-flammes et coupe-feu (8) sur la face supérieure du matériau support (1) imprégné ; et
(c) l'application de la couche supérieure et de la couche inférieure (21a, 21 b) sur le matériau support (1) imprégné et dont la face supérieure est pourvue du matériau pare-flammes et coupe-feu (8).

15. Procédé selon la revendication 14, caractérisé en ce que, pendant l'étape de procédé (a), le matériau support (1) est imprégné d'abord avec un liant de renfort (3) et ensuite avec un bitume (26), de préférence un bitume à base de polymère, ou avec un matériau pour la couche inférieure ou la couche supérieure.

16. Procédé selon la revendication 15, caractérisé en ce qu'entre l'imprégnation avec un liant de renfort (3) et l'imprégnation avec le bitume (26), de préférence un bitume à base de polymère, ou avec un matériau pour la couche inférieure ou la couche supérieure, le matériau support (1) imprégné est séché.

17. Procédé de fabrication d'un matériau ignifugé en feuille pour toitures et étanchéification selon l'une des revendications 1 à 13, comprenant une première partie de procédé pour la fabrication d'un produit intermédiaire (13) d'un matériau en feuille pour toitures et étanchéification et une deuxième partie de procédé pour la transformation du produit intermédiaire (13) d'un matériau en feuille pour toitures et étanchéification en le matériau en feuille pour toitures et étanchéification (19, 20) ;
la première partie de procédé comprenant les étapes suivantes de procédé :
(a) l'imprégnation du matériau support d'armature (1) avec un matériau d'imprégnation (3) qui augmente la résistance de celui-ci vis-à-vis d'une charge thermique et/ ou mécanique ; et
(b) l'application du matériau pare-flammes et coupe-feu (8) sur la face supérieure du matériau support (1) imprégné ;
et la deuxième partie de procédé comprenant les étapes suivantes de procédé :
(c) l'imprégnation du produit intermédiaire (13) d'un matériau en feuille pour toitures et étanchéification avec un bitume (26), de préférence un bitume à base de polymère, ou avec un matériau pour la couche inférieure ou la couche supérieure ; et
(d) l'application de la couche inférieure et de la couche supérieure (21a, 21b) sur le produit intermédiaire (13) d'un matériau en feuille pour toitures et étanchéification avec un bitume (26), de préférence un bitume à base de polymère, ou avec un matériau pour la couche inférieure ou la couche supérieure.

18. Procédé selon la revendication 17, caractérisé en ce que le matériau support (1) est imprégné avec un liant de renfort (3) pendant l'étape de procédé (a).

19. Procédé selon la revendication 17 ou 18, caractérisé en ce qu'après l'étape de procédé (b), on effectue un séchage comme étape supplémentaire de procédé.

20. Procédé selon la revendication 17, 18 ou 19, caractérisé en ce qu'on effectue un confectionnement comme dernière étape de procédé de la première partie de procédé.

21. Procédé selon l'une des revendications 14 à 20, caractérisé en ce qu'après l'étape de procédé qui consiste à appliquer la couche inférieure et la couche supérieure (21a, 21b), la face supérieure et/ou la face inférieure du matériau en feuille pour toitures et étanchéification (19, 20) sont revêtues d'un matériau minéral à saupoudrer (22) ou pourvues d'une feuille de recouvrement (23).

22. Procédé selon la revendication 21, caractérisé en ce qu'après le saupoudrage, le matériau en feuille pour toitures et étanchéification (19, 20) est refroidi et éventuellement confectionné.

23. Procédé selon l'une des revendications 14 à 22, caractérisé en ce qu'on applique, comme matériau pare-flammes et coupe-feu (8), un matériau pare-flammes et coupe-feu intumescent et/ou qui dégage du gaz, sur la face supérieure du matériau support d'armature (1).

24. Procédé selon l'une des revendications 14 à 23, caractérisé en ce que le matériau pare-flammes et coupe-feu (8) est appliqué sur la face supérieure du matériau support d'armature (1) en une quantité de 20 à 120 g/m², de préférence en une quantité de 40 à 80 g/m².

25. Procédé selon l'une des revendications 14 à 24, caractérisé en ce que le matériau pare-flammes et coupe-feu (8) est appliqué sur la face supérieure du matériau support (1) par saupoudrage mécanique.

26. Procédé selon l'une des revendications 14 à 25, caractérisé en ce que le matériau pare-flammes et coupe-feu (8) est appliqué sur le matériau support imprégné (1) par saupoudrage dans un champ électrostatique (18).

27. Procédé selon l'une des revendications 14 à 26, caractérisé en ce que le matériau pare-flammes et coupe-feu (8) est appliqué de manière adhésive avec une colle sur la face supérieure du matériau support imprégné (1).

28. Procédé selon la revendication 27, caractérisé en ce qu'on utilise le matériau d'imprégnation (3, 26) comme une colle pour appliquer le matériau pare-flammes et coupe-feu (8) de manière adhésive sur la face supérieure du matériau support (1).

29. Procédé selon la revendication 27 ou 28, caractérisé en ce qu'on élimine l'excès de matériau pare-flammes et coupe-feu (8) qui n'adhère pas sur la face supérieure du matériau support imprégné (1), de préférence par aspiration.

30. Procédé selon l'une des revendications 14 à 29, caractérisé en ce que le matériau support d'armature (1) est une structure plane textile ou du type textile, en particulier un non-tissé, un tissé, un tissu, un tissu à mailles ou tricoté ou une combinaison de plusieurs de ces types de structures planes, comme, de préférence, un matériau support formé de la combinaison d'un non-tissé et d'un tissé ou d'un non-tissé et d'un tissu à mailles.

31. Procédé selon l'une des revendications 14 à 30, caractérisé en ce qu'une partie du matériau support d'armature (1), qui correspond à une zone de couture ou de jointure (24) du matériau fini en feuille pour toitures et étanchéification (19, 20), est laissée exempte de matériau pare-flammes et coupe-feu (8) et/ou de matériau minéral à saupoudrer (22).
